# EUROPEAN PATENT SPECIFICATION

(11) **EP 0 650 841 B1**
(45) Date of publication and mention of the grant of the patent: **31.07.2002**
(21) Application number: 94117284.3
(22) Date of filing: 02.11.1994
(51) Int. Cl.: B41J 3/407

(54) **Printing apparatus**
Druckgerät
Dispositif d'impression

(30) Priority: 02.11.1993 JP 27424493; 02.12.1993 JP 32957293; 02.12.1993 JP 32959993
(43) Date of publication of application: 03.05.1995
(73) Proprietor: Casio Computer Co., Ltd., Shibuya-ku, Tokyo 151-8543 (JP)
(72) Inventor: Handa, Yuji, c/o Patent Department, Hamura-shi, Tokyo 190-11 (JP); Mochinaga, Nobuyuki, c/o Patent Department, Hamura-shi, Tokyo 190-11 (JP); Kim, Hiroki, c/o Patent Department, Hamura-shi, Tokyo 190-11 (JP)
(74) Representative: Grünecker, Kinkeldey, Stockmair & Schwanhäusser Anwaltssozietät

(56) References cited:
- EP-A- 0 497 352
- EP-A- 0 506 461
- EP-A- 0 577 247
- EP-A- 0 592 198
- GB-A- 2 120 821
- US-A- 4 827 358
- PATENT ABSTRACTS OF JAPAN vol. 10, no. 165 (P-467) 12 June 1986 & JP-A-61 018 034 (CANON KK) 25 January 1986

## Description

The invention relates to a label printer as set forth in the preamble of claim 1. A label printer of this kind is known from EP-A-0497352.

The aforementioned document describes a tape printer unit wherein when input means inputs alphanumeric data to be printed and a character-size code of the alphanumeric data together with a line-feed code, it is determined based on the number of lines of the input alphanumeric data and the maximum character size of each line whether or not the alphanumeric data can be printed on a tape attached to a printer, and when it is determined that the print is enabled, the input alphanumeric data is printed on the tape.

GB-A-2120821 discloses a label printer adapted for record different label formats and printing labels having variable information in a selected on of said formats, wherein a label format may be entered into a memory by a supervisor on entry of a password and thereafter prompts for the several fields of a label in that format are displayed line by line on a display. Variable information within the selected format is entered by the operator in response to the prompts using a built-in keyboard.

From UA-A-4,827,358 an apparatus for recording data in suitable format depending on the size of the recording material is known comprising a plurality of pattern generators to generate plural different patterns for each character code, so that one of the patterns may be selected according to the size of the recording sheet.

With the label printer, it is possible to create various types of labels, such as labels for document files, video tapes, and audio cassette tapes. However, when the width of label tape changes, the number of printable lines of data, character size in each line, etc., change accordingly, which makes the format setting complicated and troublesome. Therefore, although the user has set the formats, good print results cannot be obtained because of a badly-balanced arrangement of print data items on the label tape, or printing cannot be done because the print data items are larger than the label tape, unless the number of printable lines and the character size are appropriate for the label tape width.

Accordingly, for proper printing, the user must set formats, taking into account the label tape width, the number of lines of print data, and the character size.

Furthermore, with the conventional label printer, the key-entered character data or the image data read from an image reader first appears on the display section, such as a liquid-crystal display. To enlarge and print the displayed character data or image data as needed, a printing format is specified in such a manner that the size of character data is A mm in height and B mm in width, or double size printing is specified in advance, for example.

It is convenient if whether or not the overall balance, including the arrangement of characters and the sizes of characters, is appropriate can be verified, when various sizes of characters are specified and character string data is entered. The conventional label printers are low-priced and have a small display section with an insufficient display function that can only display the entire layout of the character string entered. Because the actual characters are not displayed in this layout, it is impossible to confirm the characters in a state like the printed state. Consequently, the conventional label printers have the disadvantage of wasting label tape, although the user has actually printed characters on label tape for a trial and managed to obtain the desired print results.

Accordingly, an object of the present invention is to provide a label printer which enables easy selection of the optimum format corresponding to the size of a printing medium and the number of lines of print data, thereby producing excellent print results easily without a failure.

Still another object of the present invention is to provide a label printer which enables the user to exactly know how large the print data is to be printed on a printing medium before printing the print data appearing on the display section, thereby producing excellent print results easily.

Still another object of the present invention is to provide a label printer which enables the user to verify the print data that is forced to appear in the printed form on the display section without trial printing on a printing medium, thereby producing excellent print results easily.

These objects are accomplished by providing a label printer as set forth in claim 1. A preferred embodiment of the invention is subject matter of claim 2.

With the invention, the format selecting means selects the format corresponding to the number of lines of print data from the plurality of types of formats stored in the format storage means. Therefore, because the optimum format can be set regardless of the number of lines of print data, anybody can obtain good print results easily. Furthermore, the format setting becomes simpler and therefore the apparatus is easier to operate.

Further, the format selecting means selects the format corresponding to the size of a printing medium and the number of lines of print data from the plurality of types of formats stored in the format storage means. Therefore, because the optimum format can be set regardless of the size of a printing medium and the number of lines of print data, anybody can obtain good print results easily without a failure. Furthermore, the format setting becomes simpler and therefore the apparatus is easier to operate.

This invention can be more fully understood from the following detailed description when taken in conjunction with the accompanying drawings, in which:
FIG. 1 is a block diagram of a label printer according to a first and a second embodiment of the present invention;

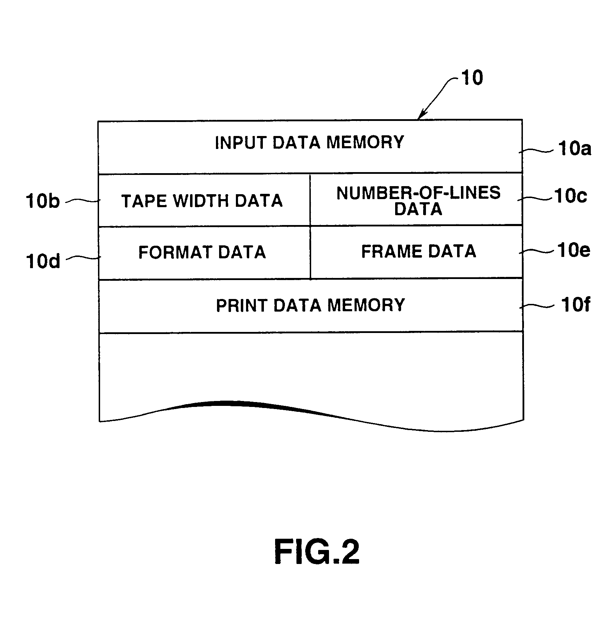

FIG. 2 shows the structure of the label printer RAM in the first and second embodiments of the present invention;
FIG. 3 shows an example of the format data stored in the format storage section of the label printer in the first embodiment of the present invention;
FIG. 4 is a flowchart to help explain the operation of the label printer in the first embodiment of the present invention;
FIG. 5 shows examples of print made on label tape by the label printer in the first embodiment of the present invention;
FIG. 6 is a flowchart to help explain the format setting on the label printer in the first embodiment of the present invention;
FIG. 7 shows examples of the format setting screen of the label printer in the first embodiment of the present invention;
FIG. 8 is a flowchart to help explain the operation of the label printer according to the second embodiment of the present invention;
FIG. 9 is a diagram to help explain a plurality of frame data items stored in the frame memory of the label printer in the second embodiment of the present invention;
FIG. 10 is a diagram to help explain the structure of a frame data item used in the label printer of the second embodiment of the present invention;
FIG. 11 shows print examples when character data items and frame data items are combined together and printed on the label printer of the second embodiment of the present invention;
FIG. 12 shows the construction of the tape cartridge in the label printer in the first and second embodiments; and
FIG. 13 shows the relationship between the tape cartridge and the label printer body in the label printer of the first and second embodiments.

Hereinafter, referring to the accompanying drawings, embodiments of the present invention will be explained.

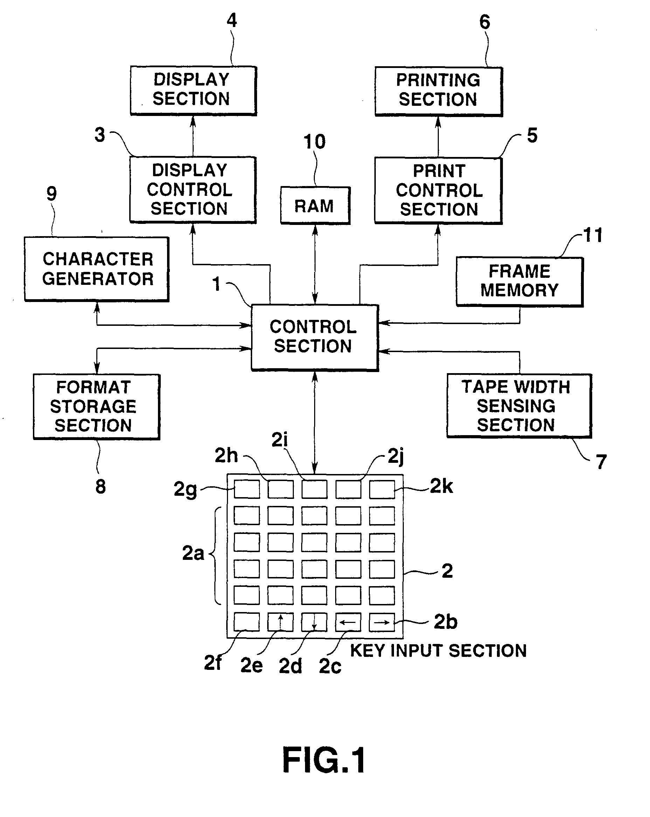

FIG. 1 is a block diagram of a label printer according to a first embodiment of the present invention.

As shown in FIG. 1, the label printer comprises a control section 1, a key input section 2, a display control section 3, a display section 4, a print control section 5, a printing section 6, a tape width sensing section 7, a format storage section 8, a character generator 9, a RAM 10, and a frame memory 11 (used in a second embodiment only).

The control section 1 is composed of a microprocessor, a program ROM, and its peripheral circuitry. It controls the entire operation of the label printer according to a control program.

The key input section 2 is provided with a keyboard, a keyboard interface, and an input buffer. It supplies input data to the control section 1. The keyboard contains character keys 2a, cursor keys 2b to 2e, an execute key 2f, a format key 2g for specifying format setting, a print key 2h for specifying print, a frame key 2i for specifying frame selection, a cancel key 2j, and a return key 2k.

The display control section 3 controls the display section 4 under the control of the control section 1.

The display section 4 is made up of a dot matrix liquid-crystal unit, for example. It displays input data, selection menus, etc.

The print control section 5 controls the printing section 6 under the control of the control section 1.

The printing section 6 is provided with a thermal head and a driving section for the thermal head, label tape, and an ink ribbon. It thermally drives each heat element of the thermal head under the control of the print control section 5, thereby printing the print data entered from the key input section 2 on label tape, while transporting the label tape (a printing medium) and an ink ribbon.

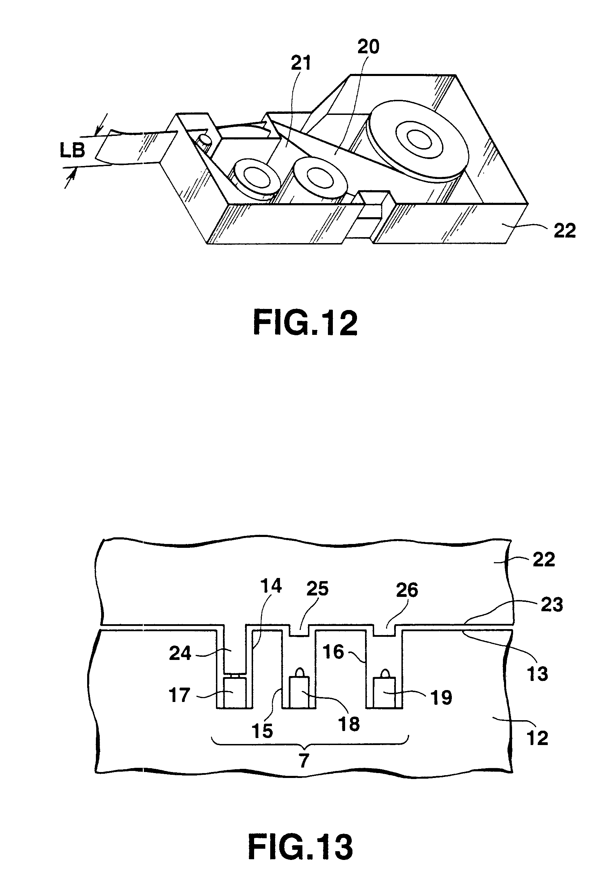

The tape width sensing section 7, as shown in FIGS. 12 and 13, senses the type of a tape cartridge 22 installed on the label printer body 12, and then the width LB of the label tape 20 housed in the tape cartridge 22, and thereafter sends these sense signals to the control section 1.

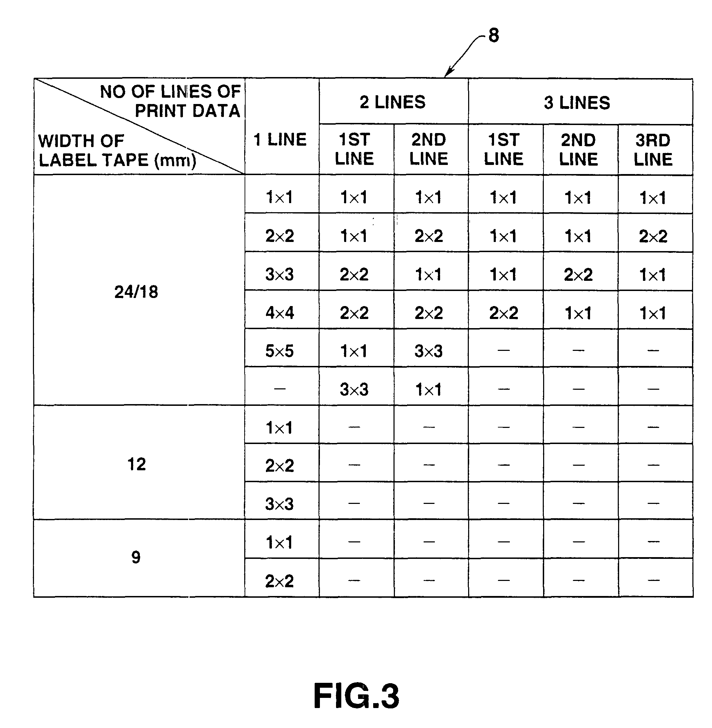

The format storage section 8 stores format data items that can be selected according to the width LB of label tape 20 and the number of lines of print data. The format data items stored in the format storage section 8 will be explained later, referring to FIG. 3.

The character generator 9 is a dot pattern memory for converting the input data from the key input section 2 into display pattern data to be displayed on the display section 4 and also into print pattern data to be printed on the printing section 6.

The RAM 10, which functions as a work memory of the control section 1, comprises an input data memory 10a for storing the character data entered from the key input section 2 in the form of character codes, an area 10b for storing the width data on the label tape sensed at the tape width sensing section 7, an area 10c for storing data about the number of lines of the character data (print data) entered from the key input section 2, an area 10d for storing the format data items selected from a plurality of format data items stored in the format storage section 8, an area 10e for storing the frame data items selected in a second embodiment explained later, and a print data memory 10f for storing in dot patterns the print data to be supplied to the printing section 6, which prints it on label tape.

As shown in FIG. 3, the format storage section 8 stores a set of formats which, according to the width LB of label tape 20 and the number of lines of print data, allow data of the number of lines to be printed on the label tape 20 of the width. In other words, the printable size of print data can be stored for each line according to the width LB of label tape 20 and the number of lines of print data.

Specifically, in this embodiment, it is assumed that 24-mm, 18-mm, 12-mm, 9-mm, and 6-mm-wide label tapes 20, or label tape with five different widths, can be used. The format storage section 8 stores the format data items that can be selected and set for each of the following cases: where the width LB of label tape 20 is 24 mm or 18 mm and the print data has one to three lines, where the width LB of label tape 20 is 12 mm with and the print data has one line, and where the width LB of label tape 20 is 9 mm and the print data has one line. Regarding label tape 20 with a width LB of 6 mm and the number of lines, except the above cases, such format data is not stored in the format storage section 8 because there is only one format that can be set and therefore another format cannot be selected. Each format includes print magnification for each line. A × A means that characters are printed A times as large in height and width as the basic print size (1 × 1).

For example, when the print data has one line and the width LB of label tape 20 is 24 mm or 18 mm, it is possible to select the following format data items: (1) that for printing characters at 1 × 1, (2) that for printing characters at 2 × 2, (3) that for printing characters at 3 × 3, (4) that for printing characters at 4 × 4, and (5) that for printing characters at 5 × 5 (see FIG. 3). These five format data items are stored in the format storage section 8.

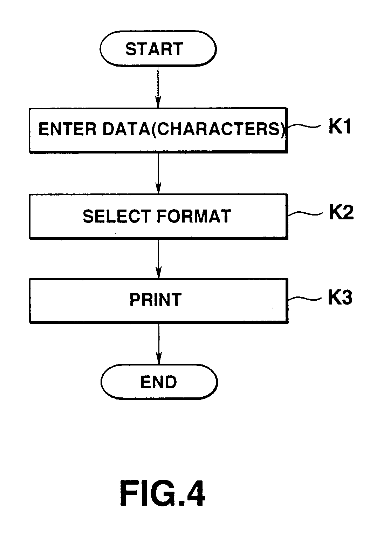

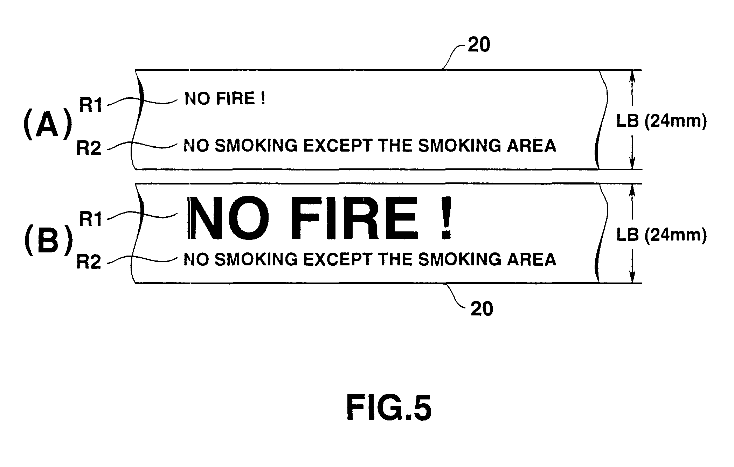

The operation of the label printer with the above configuration will be described with reference to FIGS. 4 and 5.

The major operations of the label printer consist roughly of three steps of entering data (step K1), selecting a format (step K2), and printing data (step K3), as shown in FIG. 4.

First, the user operates character keys 2a in the key input section 2 to enter character data items to be printed. When print extends over a plurality of lines, new line marks are inserted between lines by operating the return key 2k. For example, when the user wants to print "NO FIRE !" and "NO SMOKING EXCEPT THE SMOKING AREA" on the first line and the second line, respectively, he operates character keys 2a, the return key 2k, etc to enter "NO FIRE ! ! (new line) NO SMOKING EXCEPT THE SMOKING AREA." In the meantime, the control section 1 stores the entered data in the input data memory 10a of the RAM 10, converts the data into display fonts using the character generator 9, and displays the display fonts on the display section 4.

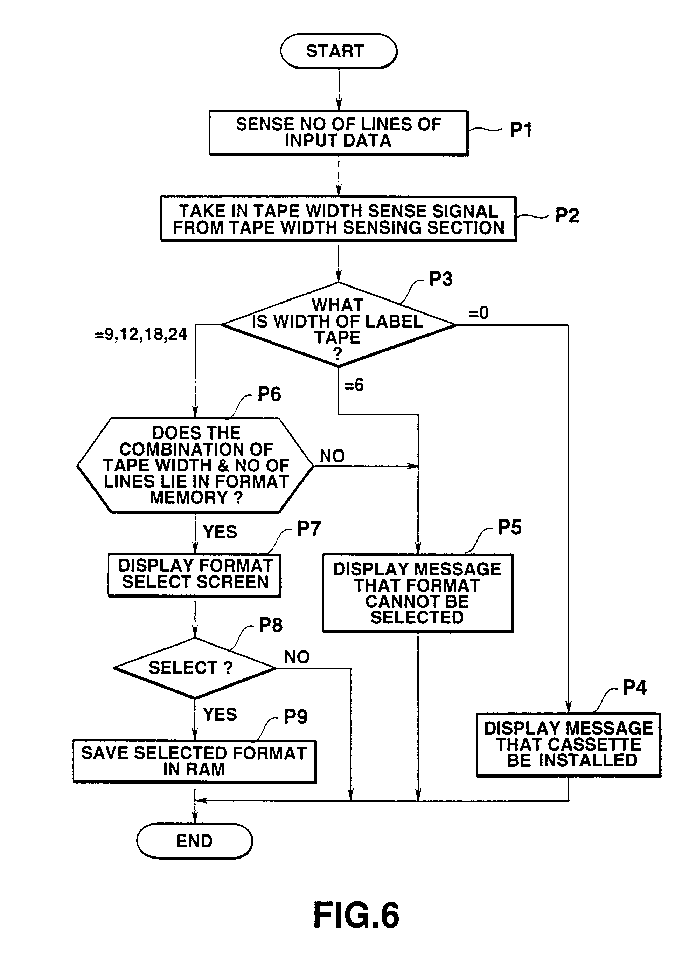

After the data input has finished, the user operates the format key 2h in the key input section 2 to set a format for printing. In response to the operation of the format key 2h, the control section 1 starts the processing shown in the flowchart of FIG. 6. First, the control section 1 senses the number of lines of the print data (the entered data) stored in the RAM 10, or the number of print lines (step P1). The number of lines can be obtained easily by adding one to the number of new line codes contained in the entered data, for example. The sensed number of lines of print data is stored in the storage area 10c of the RAM 10.

Then, the control section 1 takes in the tape width sense signal from the tape width sensing section 7 (step P2) and senses the width LB of the label tape 20 housed in the tape cartridge 22 installed on the label printer body 12 (step P3). The sensed width LB of label tape 20 is stored in the storage area 10b of the RAM 10.

When the width LB of label tape 20 is 0, or when the tape cartridge 22 has not been installed on the label printer body 12, the control section 1 displays on the display section 4 the warning message that a tape cartridge 22 of label tape 20 should be installed (step P4).

When the width LB of label tape 20 is 6 mm, the control section 1 displays on the display section 4 the warning message that a format cannot be selected, because the format is limited to only one type (step P5).

When the width LB of label tape 20 is any of 24 mm, 18 mm, 12 mm, and 9 mm, the control section 1 judges which combination stored in the format storage section 8 corresponds to the combination of the width LB of label tape 20 and the number of lines of print data (step P6). When the combination of the width LB of label tape 20 sensed at the tape width sensing section 7 and the number of lines of print data entered from the key input section 2 does not correspond to any combinations set in the format storage section 8, the control section 1 displays on the display section 4 the warning message that format selection cannot be effected (step P5).

When the combination of the width LB of label tape 20 and the number of lines of print data corresponds to one of the combinations set in the format storage section 8, the control section 1 displays on the display section 4 the format select screen for selecting the format corresponding to the combination (step P7).

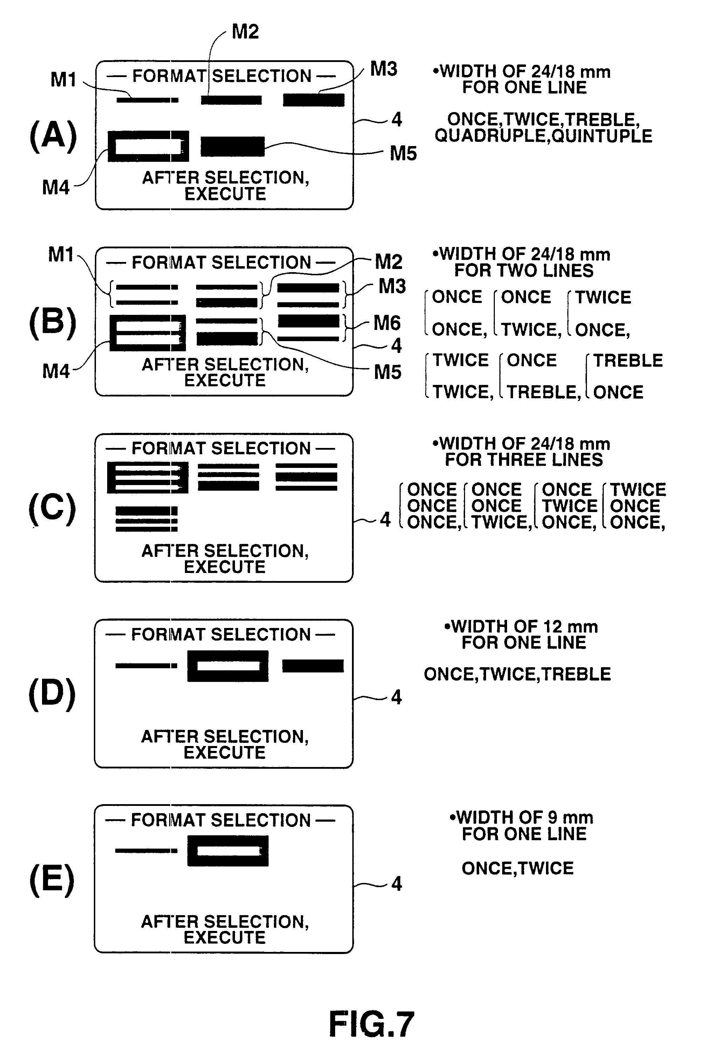

Examples of the format select screen on the display section 4 are shown at (A) to (E) in FIG. 7.

Each format select screen visually shows the print size for each line in printing data according to the format. FIG. 7 shows at (A) a screen for selecting format data items when the width LB of label tape 20 is 24 mm or 18 mm and the print data has one line; FIG. 7(B) shows a screen for selecting format data items when the width LB of label tape 20 is 24 mm or 18 mm and the print data has two line; FIG. 7 shows at (C) a screen for selecting format data items when the width LB of label tape 20 is 24 mm or 18 mm and the print data has three lines; FIG. 7 shows at (D) a screen for selecting format data items when the width LB of label tape 20 is 12 mm and the print data has one line; and FIG. 7 shows at (E) a screen for selecting format data items when the width LB of label tape 20 is 9 mm and the print data has one line.

In the respective select screens shown at (A) to (E) in FIG. 7, the width of the black stripe marks displayed corresponds to the print size of characters in the line to be printed. When the mark overlaps with the cursor, the overlapped portions are displayed reversely.

For example, at step P6 of FIG. 6, when it is judged that the width LB of label tape 20 is 24 mm or 18 mm and the print data has two lines, according to what is stored in the format storage section 8 shown in FIG. 3, it is possible to select any one of the following six format data items: (1) that for printing the characters on the first line and the second line at 1 × 1, (2) that for printing the characters on the first line at 1 × 1 and the ones on the second line at 2 × 2, (3) that for printing the characters on the first line at 2 × 2 and the ones on the second line at 1 × 1, (4) that for printing the characters on the first line and the second line at 2 × 2, (5) that for printing the characters on the first line at 1 × 1 and the ones on the second line at 3 × 3, and (6) that for printing the characters on the first line at 3 × 3 and the ones on the second line at 1 × 1.

The format select screen at (B) in FIG. 7 shows images printed on the basis of these six format data items. Specifically, at (B) in FIG. 7, (1) two black stripe marks M1 at the upper left represent print images in printing characters in the first and the second line at a magnification of 1 × 1, (2) black stripe marks M2 in the upper middle of the menu represent print images in printing characters in the first line at a magnification of 1 × 1 and those in the second line at a magnification of 2 × 2, (3) black stripe marks M3 at the upper right of the menu represent print images in printing characters in the first line at a magnification of 2 × 2 and those in the second line at a magnification of 1 × 1, (4) two white stripe marks M4 (reversed display due to the cursor) at the lower left represent print images in printing characters in the first and the second line at a magnification of 2 × 2, (5) two black stripe marks M5 in the lower middle of the menu represent print images in printing characters in the first line at a magnification of 1 × 1 and those in the second line at a magnification of 3 × 3, (6) two black stripe marks M6 at the lower right of the menu represent print images in printing characters in the first line at a magnification of 3 × 3 and those in the second line at a magnification of 1 × 1.

The user operates cursor keys 2b to 2e and execute key 2f to select one of the displayed print images (black stripe marks M1 to M3, M5, M6, and'white stripe mark M4) (step P8). When the user does not want to select any, he has only to operate the cancel key 2j. The selection result is stored in the format data storage area 10d of the RAM (step P9). This completes the setting of format data items according to the width LB of label tape 20 and the number of lines of print data, using the format storage section 8.

Then, the user operates the print key 2h in the key input section 2. In response to the key operation, the control section 1 reads from the format storage section 8 the format data item corresponding to the selection result stored in the RAM 10. It then converts the print data stored in the RAM 10 into dot pattern data using the character generator 9, enlarges it at the magnification determined by the format data item, and thereafter writes the enlarged data in the print data memory 10f of the RAM 10 in the form of print patterns (dot patterns).

After print patterns have been created at the RAM 10, the control section 1 segments the print data created in dot patterns into lines of the heat elements of the printing section 6 and then supplies these to the printing section 6. The printing section 6 prints on the label tape 20 according to the print data supplied. By the above processes, the print data (input data) is printed on the label tape 20 according to the selected format data items.

For example, when the print data has two lines and the width LB of label tape 20 is 24 mm, it is possible to select one from the above six format data items. For selection, the select screen shown at (B) in FIG. 7 appears. If the user selects the black stripe marks M1 at the upper left of the screen, "NO FIRE !," "NO SMOKING EXCEPT THE SMOKING AREA" are printed on the label tape 20 on the first line R1 and the second line R2 in a print size once as large in height and width as the basic print size, according to the settings (1 × 1 for the first and second lines) in the format storage section 8, as shown at (A) in FIG. 5.

If the user selects the black stripe marks M6 at the lower right of the screen, "NO FIRE !" is printed on the first line R1 of the label tape 20 in a size three times as large in height and width as the basic print size and "NO SMOKING EXCEPT THE SMOKING AREA" are printed on the second line R2 in a print size once as large in height and width as the basic print size, according to the settings (3 × 3 for the first line and 1 × 1 for the second line) in the format storage section 8, as shown at (B) in FIG. 5.

As described above, with the embodiment, according to a combination of the width LB of label tape 20 installed on the label printer body 12 and the number of lines of print data, candidates for format data items printable within the width LB of label tape 20 are selectively displayed. Therefore, by selecting one of the format data candidates displayed, the user can set format data without performing complicated format data setting. Furthermore, print data can be printed within the width LB of label tape 20 line by line in a size (at a magnification) that the user wants.

Hereinafter, a second embodiment of the present invention will be explained.

A label printer according to the second embodiment is constructed by adding the function of decorating the outside of the print data consisting of character data with a frame and printing this decorated data, to the label printer of the first embodiment. The label printer of the second embodiment differs from that of the first embodiment in that a frame memory 11 is added in the block diagram of FIG. 1.

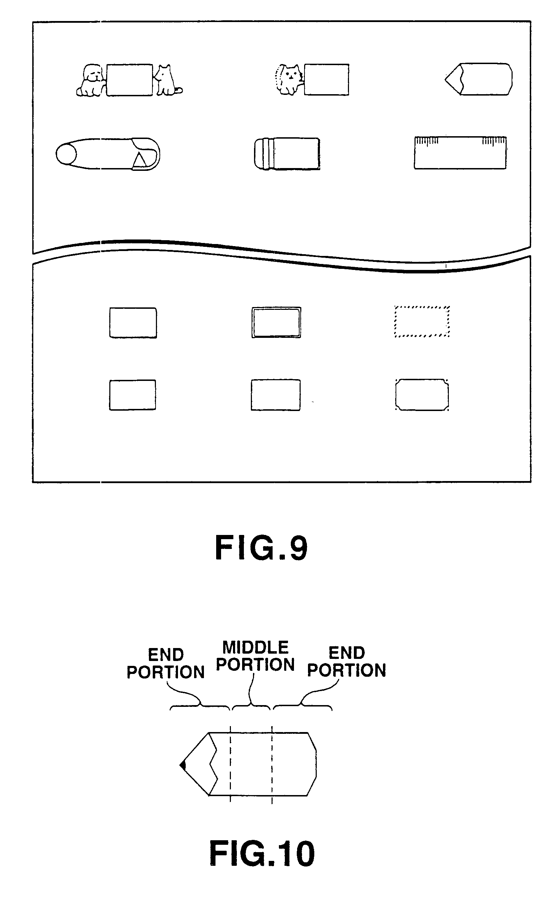

The frame memory 11 of FIG. 1 stores data on a plurality of types of frames as shown in FIG. 9, for example.

The label printer of the second embodiment selects one of frames as shown in FIG. 9, combines the selected frame data with the character data entered from the key input section 2, and prints the characters with a frame.

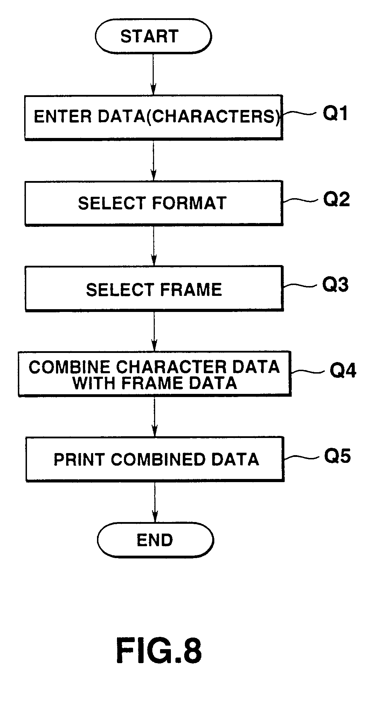

FIG. 8 is a flowchart to help explain the operation of the label printer of the second embodiment.

For example, to combine the input data consisting of character data with given frame data, the user first enters the character data from the key input section 2. The character code data corresponding to the entered character data is stored in the input data memory 10a of the RAM 10 (step Q1).

After the character data has been entered, formats are selected in the same manner as the first embodiment (step Q2).

Then, the user operates the frame key 2i in the key input section 2 to specify frame selection, for example. In response to this specification, the control section 1 displays a plurality of frame data items stored previously in the frame memory 11 on the display section 4. Because all of the frame data items cannot be displayed at a time under restriction of the display capacity of the display section 4, a plurality of frame data items are displayed sequentially on the display section 4 by operating the cursor keys 2b to 2e. The user operates the cursor keys 2b to 2e and the execute key 2f to select a given frame data item. The selected data item is stored in the storage area 10e of RAM 10 (step Q3).

Then, when the print key 2h is operated, the input data is written in the print data memory 10f of the RAM 10 in the form of dot patterns according to the selected format. At this time, the dot patterns of the selected frame data are enlarged so as to coincide with the selected format and is written in the print data memory 10f of RAM 10, thereby combining the character data with the frame data enclosing the character data (step Q4).

A further explanation of frame data will be given.

For example, each frame as shown in FIG. 9 consists of two end portions at the right and left and a middle portion connecting these end portions, as shown in FIG. 10. Data on the two end portions is stored previously in the basic size of 1 × 1 in the frame memory 11 in the form of dot pattern data. The data on the end portions is enlarged in height, as necessary, so as to coincide with the selected format, when being combined with the character data. Data on the middle portion of FIG. 10 is for straight lines just connecting the two end portions. Because the length of the character data to be decorated changes, the control section 1 creates the straight line in the RAM 10 according to a program.

The combination of character data with frame data will be described further. When the print key 2h is operated, the character pattern data corresponding to the character code of the character data stored in the input data memory 10a of the RAM 10 is outputted from the character generator 9. This character pattern data is enlarged, as necessary, on the basis of the selected format data stored in the storage area 10d of RAM 10, and then is written as dot pattern data in the print data memory 10f. Furthermore, the selected frame data (the dot pattern data for the right and left end portions) stored in the storage area 10e of the RAM 10 is enlarged in height, as necessary, so as to enclose the character data. The enlarged data is positioned at the right and left ends of the character data and then written in the print data memory 10f of the RAM 10. Then, the control section 1 further writes the dot pattern data forming the middle portion of the frame into the print data memory 10f, thereby combining the character data with the frame data.

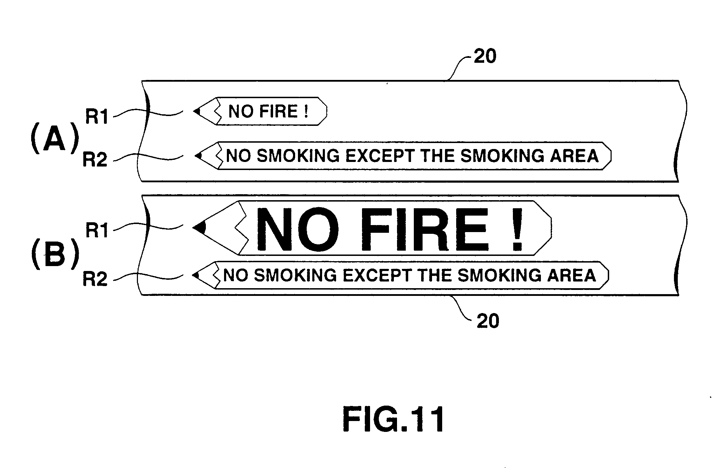

After the development of dot patterns has finished, the control section 1 segments the developed data into each line of the heat elements of the printing section 6 and supplies these segmented data items to the printing section 6. The printing section 6 prints on the label tape 20 according to the print data supplied (step Q5). Accordingly, as shown at (A) and (B) in FIG. 11 in comparison with FIG. 5, "NO FIRE !" is printed on the first line R1 of the label tape 20 in a size three times as large in height and width as the basic print size, within a frame of a suitable size; and "NO SMOKING EXCEPT THE SMOKING AREA" is printed on the second line R2 of the label tape in a size once as large in height and width as the basic print size, within a frame of a suitable size.

Explained next will be the configuration of the tape width sensing section 7.

As shown in FIG. 12, the label tape 20, together with ink tape 21, is set in the tape cartridge 22. FIG. 12 is a view of the tape cartridge 22 with the top cover removed.

At the label printer mounting surface 23 of the tape cartridge 22, three projected portions 24, 25 and 26 are formed as shown in FIG. 13. On the other hand, at the tape cartridge mounting surface 13 of the label printer body 12, three recessed portions (small holes) 14, 15 and 16 are formed so as to coincide with the projected portions 24, 25 and 26. In the recessed portions 14, 15 and 16, microswitches 17, 18 and 19 are placed. The on/off signals from the microswitches 17, 18 and 19 are supplied to the tape width sensing section 7 (FIG. 1).

The projected portions 24 to 26 of the tape cartridge 22 housing a 6-mm-wide label tape 20 are formed long; the projected portion 24 of the tape cartridge 22 housing a 9-mm-wide label tape 20 is formed long and its projected portions 25 and 26 are formed short; the projected portion 25 of the tape cartridge 22 housing a 12-mm-wide label tape 20 is formed long and its projected portions 24 and 26 are formed short; the projected portions 24 and 25 of the tape cartridge 22 housing a 18-mm-wide label tape 20 are formed long and its projected portion 26 is formed short; and the projected portion 26 of the tape cartridge 22 housing a 24-mm-wide label tape 20 is formed long and its projected portions 24 and 25 are formed short.

With the tape cartridge 22 installed on the label printer body 12, the long projected portions turn on the microswitches 17 to 19, and the short projected portions keep them in the off state.

Therefore, when the tape cartridge 22 is not installed, all of the microswitches 17 to 19 are off. For example, when a tape cartridge 22 housing a 9-mm-wide label tape 20 is installed, microswitch 17 turns on, and microswitches 18 and 19 remain off; and when a tape cartridge 22 housing a 18-mm-wide label tape 20 is installed, microswitches 17 and 18 turn on, and microswitch 19 remains off. The tape width sensing section 7 decodes the on/off signals from the microswitches 17 to 19 and determines the width LB of the label tape 20 housed in the tape cartridge 22 installed.

The projected portions 24 to 26 may be combined arbitrarily, and their combinations are not limited to those in the embodiment. While in the embodiment, the type of the tape cartridge 22 installed is sensed from the on/off states of the microswitches 17 to 19, and the width LB of the label tape 20 housed in the cartridge is sensed indirectly, the width LB of label tape 20 may be sensed directly.

As described above, with the first and second embodiments, at least one format data that can be set is displayed according to the width LB of the label tape 20 installed on the label printer body 12 and the number of lines of print data. Just by selecting the desired one from these data format items, the format data item can be set. This avoids the problem of being unable to print the entered data on the label tape 20 installed. Furthermore, when the entered data is to be decorated with a frame, the frame can be set to a suitable size automatically.

The present invention is not restricted to the above embodiments. For instance, the form of the format select screen is not limited to those shown at (A) through (E) in FIG. 7. For instance, the magnification of characters for each line may be displayed directly so that the user can select a magnification (or a combination of magnifications). Furthermore, for instance, five patterns of the format select screen shown at (A) through (E) in FIG. 7 may be created previously and stored in a memory, and then these patterns may be read and displayed. In addition, a select screen may be created according to the format data set in the format storage section 8 on the basis of the width of label tape and the number of lines of entered data.

While in the above embodiment, the width of label tape and the number of lines of data are automatically sensed, they may be entered from the key input section 2. The present invention is not limited to the label printer, but may be applied to ordinary word processors and personal computers. The print data may be symbolic, numerical, or image data in addition to character data. The size of a printing medium includes its horizontal width and vertical width.

## Claims

1. A label printer comprising:
a label printer body (12);
a plurality of label tapes (20) having different widths and received in a plurality of tape cartridges (22) of various types which are selectively attachable to said label printer body (12);
tape width sensing means (7) for detecting the width of said label tape (20) on the basis of said cartridge (22) attached to said label printer body (12);
input means (2) for inputting print data including a plurality of lines of characters;
number-of-lines detecting means (1, step P1) for detecting the number of lines of the print data input by said input means (2);
display means (4) for displaying the print data input by said input means (2) and selection menus; and
print means (6) for printing the print data input by said input means (2) onto said label tape;
**characterized by**
format storage means (8) for storing as format data a plurality of kinds of different combinations of character lines different in print size in correspondence with the different widths of label tapes (20) and the number of lines to be printed on the label tape (20);
determining means (1, step P6) for determining whether or not the format data corresponding to the width of the label tape detected by said tape width sensing means (7) and the number-of-lines of the print data detected by said number-of-lines detecting means (1, step P1) is previously stored in said format storage means (8);
display control means (1, 3, steps P5, P7) for allowing automatically a format selection screen representing the plurality of format data to display on said display means when said determining means (1, step P6) determines that the format data corresponding to the width of the label tape detected by said tape width sensing means (7) and the number-of-lines of the print data detected by said number-of-lines detecting means is stored in said format storage means (8), and for allowing a non-storage state to display on said display means when said determining means (1, step p6) determines that the format data corresponding to the width of the label tape detected by said tape width sensing means (7) and the number-of-lines of the print data detected by said number-of-lines detecting means is not stored in said format storage means (8);
format selecting means (1, 2b-2f) for manually selecting one format data from the plural format data on the basis of the format selection screen displayed on said display means by said display control means (1, 3, step P7); and
print control means (1, 5) for forming the print pattern of the print data input by said input means (2) on the basis of the format data selected by said format selecting means (1, 2b-2f), supplying the print data to said print means (6) and driving said print means to print the print data on the label tape (20).

2. A label printer according to claim 1, **characterized in that** said display control means (1, 3, step P7) displays marks (M1-M6) representing the number of lines of the print data and the size of each line of the print data on said display means (4).

## Patentansprüche

1. Etikettendrucker, der umfasst:
einen Etikettendruckerkörper (12);
mehrere Etikettenbänder (20) mit unterschiedlichen Breiten, die in mehreren Bandkassetten (22) verschiedener Typen aufgenommen sind, die selektiv an dem Etikettendruckerkörper (12) anbringbar sind;
eine Bandbreiten-Abfühleinrichtung (7) zur Detektion der Breite des Etikettenbandes (20) auf der Grundlage der Kassette (22), die an dem Etikettendruckerkörper (12) angebracht ist;
eine Eingabeeinrichtung (2) zur Eingabe von Druckdaten, die mehrere Zeilen von Zeichen umfassen;
eine Zeilenanzahl-Detektionseinrichtung (1, Schritt P1) zur Detektion der Zeilenanzahl der Druckdaten, die durch die Eingabeeinrichtung (2) eingegeben werden;
eine Anzeigeeinrichtung (4) zur Anzeige der Druckdaten, die durch die Eingabeeinrichtung (2) eingegeben werden, und von Auswahlmenüs; und
eine Druckeinrichtung (6) zum Drucken der Druckdaten, die durch die Eingabeeinrichtung (2) eingegeben werden, auf das Etikettenband;
**gekennzeichnet durch**
eine Formatspeichereinrichtung (8) zur Speicherung als Formatdaten mehrerer Arten unterschiedlicher Kombinationen von Zeichenzeilen, die sich in der Druckgröße unterscheiden, entsprechend den unterschiedlichen Breiten der Etikettenbänder (20) und der Zeilenanzahl, die auf das Etikettenband (20) gedruckt werden sollen;
eine Bestimmungseinrichtung (1, Schritt P6) zum Feststellen, ob die Formatdaten, die der Breite des Etikettenbandes, die **durch** die Bandbreiten-Abfühleinrichtung (7) detektiert wird, und die Zeilenanzahl der Druckdaten, die **durch** die Zeilenanzahl-Detektionseinrichtung detektiert wird (1, Schritt P1), entsprechen, vorher in der Formatspeichereinrichtung (8) gespeichert sind oder nicht;
eine Anzeigesteureinrichtung (1, 3, Schritte P5, P7), um es zuzulassen, dass ein Formatauswahlbildschirm, der die mehreren Formatdaten darstellt, automatisch auf der Anzeigeeinrichtung angezeigt wird, wenn die Bestimmungseinrichtung (1, Schritt P6) feststellt, dass die Formatdaten, die der Breite des Etikettenbandes, die **durch** die Bandbreiten-Abfühleinrichtung (7) detektiert wird, und der Zeilenanzahl der Druckdaten, die **durch** die Zeilenanzahl-Detektionseinrichtung detektiert wird, entsprechen, in der Formatspeichereinrichtung (8) gespeichert ist, und um es zuzulassen, dass ein Nichtspeicher-Zustand auf der Anzeigeeinrichtung angezeigt wird, wenn die Bestimmungseinrichtung (1, Schritt p6) feststellt, dass die Formatdaten, die der Breite des Etikettenbandes, die **durch** die Bandbreiten-Abfühleinrichtung (7) detektiert wird, und der Zeilenanzahl der Druckdaten, die **durch** die Zeilenanzahl-Detektionseinrichtung detektiert wird, entsprechen, nicht in der Formatspeichereinrichtung (8) gespeichert sind;
eine Formatauswahleinrichtung (1, 2b-2f) zur manuellen Auswahl eines der Formatdatenelemente aus den mehreren Formatdaten auf der Grundlage des Formatauswahlbildschirms, der auf der Anzeigeeinrichtung **durch** die Anzeigesteurereinrichtung angezeigt wird (1, 3, Schritt P7); und
eine Drucksteuereinrichtung (1, 5) zum Bilden des Druckmusters der Druckdaten, die **durch** die Eingabeeinrichtung (2) eingegeben werden, auf der Grundlage der Formatdaten, die **durch** die Formatauswahleinrichtung (1, 2b-2f) ausgewählt werden, zur Lieferung der Druckdaten an die Druckeinrichtung (6) und zum Betreiben der Druckeinrichtung, um die Druckdaten auf dem Etikettenband (20) zu drucken.

2. Etikettendrucker nach Anspruch 1, **dadurch gekennzeichnet, dass** die Anzeigesteurereinrichtung (1, 3, Schritt P7) Markierungen (M1-M6) anzeigt, die die Zeilenanzahl der Druckdaten und die Größe jeder Zeile der Druckdaten auf der Anzeigeeinrichtung (4) darstellen.

## Revendications

1. Imprimante d'étiquettes, comprenant :
un corps (12) d'imprimante d'étiquettes,
plusieurs rubans (20) d'étiquettes ayant des largeurs différentes et logés dans plusieurs cartouches (22) de rubans de divers types qui peuvent être fixées sélectivement au corps (12) de l'imprimante d'étiquettes,
un dispositif (7) de détection de largeur de ruban destiné à détecter la largeur du ruban d'étiquettes (20) d'après la cartouche (22) fixée au corps (12) d'imprimante d'étiquettes,
un dispositif (2) de saisie de données d'impression comprenant plusieurs lignes de caractères,
un dispositif (1, pas P1) de détection du nombre de lignes des données d'impression saisies par le dispositif de saisie (2),
un dispositif (4) d'affichage des données d'impression saisies par le dispositif de saisie (2) et des menus de sélection, et
un dispositif (6) d'impression des données d'impression saisies par le dispositif de saisie (2) sur le ruban d'étiquettes,
**caractérisé par**
un dispositif (8) de mémorisation de formats destiné à conserver, sous forme de données de format, plusieurs types de combinaisons différentes de lignes de caractères de dimension d'impression différente, correspondant aux largeurs différentes des rubans d'étiquettes (20) et au nombre de lignes à imprimer sur le ruban d'étiquettes (20),
un dispositif (1, pas P6) de détermination du fait que les données de format correspondant à la largeur du ruban d'étiquettes détecté par le dispositif (7) de détection de largeur de ruban et au nombre de lignes de données d'impression détectées par le dispositif (1, pas P1) de détection de nombre de lignes sont déjà mémorisées ou non dans le dispositif (8) de mémorisation de format,
un dispositif (1, 3, pas P5, p7) de commande d'affichage destiné à permettre automatiquement à un écran de sélection de format de représenter le fait que des données de format d'affichage sur le dispositif d'affichage lorsque le dispositif de détermination (1, pas P6) détermine que les données de format correspondant à la largeur du ruban d'étiquettes détectées par le dispositif (7) de détection de largeur de ruban et au nombre de lignes de données d'impression détectées par le dispositif de détection de nombre de lignes sont conservées dans le dispositif de mémorisation de format (8) et destinées à permettre l'affichage sur le dispositif d'affichage d'un état sans mémorisation lorsque le dispositif de détermination (1, pas P6) détermine que les données de format correspondant à la largeur du ruban d'étiquettes détectée par le dispositif (7) de détection de largeur de ruban et au nombre de lignes de données d'impression détectées par le dispositif de détection du nombre de lignes ne sont pas conservées dans le dispositif de mémorisation de format (8),
un dispositif de sélection de format (1, 2b-2f) destiné à sélectionner manuellement les premières données de format parmi plusieurs données de format d'après l'écran de section de format affiché sur le dispositif d'affichage par le dispositif de commande d'affichage (1, 3, pas P7), et
un dispositif (1, 5) de commande d'impression destiné à former le motif d'impression des données d'impression saisies par le dispositif de saisie (2) en fonction des données de format sélectionnées par le dispositif de sélection de format (1, 2b, 2f), à transmettre les données d'impression au dispositif d'impression (6) et à piloter le dispositif d'impression afin qu'il imprime les données d'impression sur le ruban d'étiquettes (20).

2. Imprimante d'étiquettes selon la revendication 1, **caractérisée en ce que** le dispositif de commande d'affichage (1, 3, pas P7) affiche les marques (M1-M6) qui représentent le nombre de lignes de données d'impression et la dimension de chaque ligne de données d'impression sur le dispositif d'affichage (4).
